# EUROPEAN PATENT APPLICATION

(11) **EP 2 947 578 A1**
(43) Date of publication of application: **25.11.2015**
(21) Application number: 13805026.5
(22) Date of filing: 25.07.2013
(51) Int. Cl.: G06F 17/30, H04L 29/08, H04L 12/771

(54) **METHOD FOR ROUTER TO PROCESS WEB PAGE DATA, AND ROUTER**

(30) Priority: 15.01.2013 CN 201310014268
(71) Applicant: ZTE Corporation, Shenzhen, Guangdong 518057 (CN)
(72) Inventor: ZHENG, Hongtao, Shenzhen Guangdong 518057 (CN); SHANG, Jiangfeng, Shenzhen Guangdong 518057 (CN); GAO, Xiling, Shenzhen Guangdong 518057 (CN)
(74) Representative: D'Halleweyn, Nele Veerle Trees Gertrudis
(86) International application number: PCT/CN2013/080108
(87) International publication number: WO 2013/185693

(57) **Abstract**

The embodiments of the present invention provide a method for a router processing web data and a router, wherein, the method includes: saving web data from a WEB server; receiving a web browsing request from a client, then judging that whether the requested web contents are saved, if the requested web contents are saved, sending the saved web contents to the client.

## Description

### Technical Field

The present invention relates to the router field, more particular to a method for a router processing web data and a router.

### Background of the Related Art

It is known that a common user may visit some famous websites every day, for example, news portal websites, shopping websites, etc, the contents of these websites change little in a day. If the user visits servers of the websites many times through a router in a day, since web contents obtained every time are same, it is to case an unnecessary waste of network traffic undoubtedly.

For the user who visits the above websites through a wireless router, wireless internet cost is generally calculated according to traffic due to the growing shortage of radio resources, if the unnecessary waste of network traffic mentioned above is reduced, not only the user experience is optimized, but also the market competitiveness of wireless router manufacturers is improved.

### Summary of the Invention

The embodiments of the present invention provide a method for a router processing web data and a router to solve a technical problem of how to reduce an unnecessary waste of network traffic caused by a user when visiting websites through the router.

The embodiments of the present invention provide a method for a router processing web data, comprising:
a router saving web data from a WEB server;
the router receiving a web browsing request from a client, judging whether requested web contents have been saved, if the requested web contents have been saved, sending the web contents requested by the client to the client.

Preferably,
the router judging whether the requested web contents have been saved comprises:
the router judging whether a website domain name included in the web browsing request has been saved in the local router, if the website domain name has been saved in the local router, returning an Internet Protocol (IP) address of the local router back to the client;
the router receiving a web content request sent to the IP address by the client, and judging whether the request web contents have been saved.

Preferably,
a router saving web data from a WEB server comprises:
the router checking whether a remaining storage space may accommodate pre-stored web contents every time before saving the web contents included in the web data; if the remaining storage space may not accommodate pre-stored web contents, deleting web contents in an occupied space according to an order of a length of a storage time from long to short, until the remaining storage space can accommodate the pre-stored web contents.

Preferably,
a router saving web data from a WEB server further comprises:
after web contents are stored in the storage space, the router setting a timer for the web contents, when a timer time is reached, deleting the web contents.

Preferably,
a router saving web data from a WEB server further comprises:
the router judging whether web contents under the domain name included in the web data exist, if the web contents under the domain name do not exist, deleting the domain name.

The embodiments of the present invention provide a router for processing web data, the router comprises a data storage module and a web content response module, wherein:
the data storage module is configured to save web data from a WEB server;
the web content response module is configured to receive a web browsing request from a client, judge whether requested web contents have been saved in the data storage module, if the requested web contents have been saved in the data storage module, send the requested web contents to the client.

Preferably,
the web content response module is configured to judge whether the requested web contents have been saved in the data storage module by the following way:
judging whether a website domain name included in the web browsing request has been saved in the local router, if the website domain name has been saved in the local router, returning an Internet Protocol (IP) address of the local router back to the client; after receiving a web content request sent to the IP address by the client, judging whether the request web contents have been saved.

Preferably,
the data storage module is configured to save web data from a WEB server by the following way:
checking whether a remaining storage space may accommodate pre-stored web contents every time before saving the web contents included in the web data; if the remaining storage space may not accommodate pre-stored web contents, deleting web contents in an occupied space according to an order of a length of a storage time from long to short, until the remaining storage space can accommodate the pre-stored web contents.

Preferably,
the data storage module is further configured to save web data from a WEB server by the following way:
after web contents are stored in the storage space, setting a timer for the web contents, when a timer time is reached, deleting the web contents.

Preferably,
the data storage module is further configured to save web data from a WEB server by the following way:
judging whether web contents under the domain name included in the web data exist, if the web contents under the domain name do not exist, deleting the domain name.

The above technical scheme reduces the network traffic caused by the user visiting the websites by means of saving the web contents and sending the saved web contents to the client.

### Brief Description of Drawings

Fig.1 is a flowchart of a method for the router processing web data according to the embodiment;
Fig. 2 is a diagram of constituent modules of a router according to the embodiment.

### Preferred Embodiments of the Invention

The embodiments of the present invention will be described in details below, in conjunction with accompanying drawings. It should be illustrated that without a conflict, the embodiments of the present application and the features in the embodiments can be combined with each other randomly.

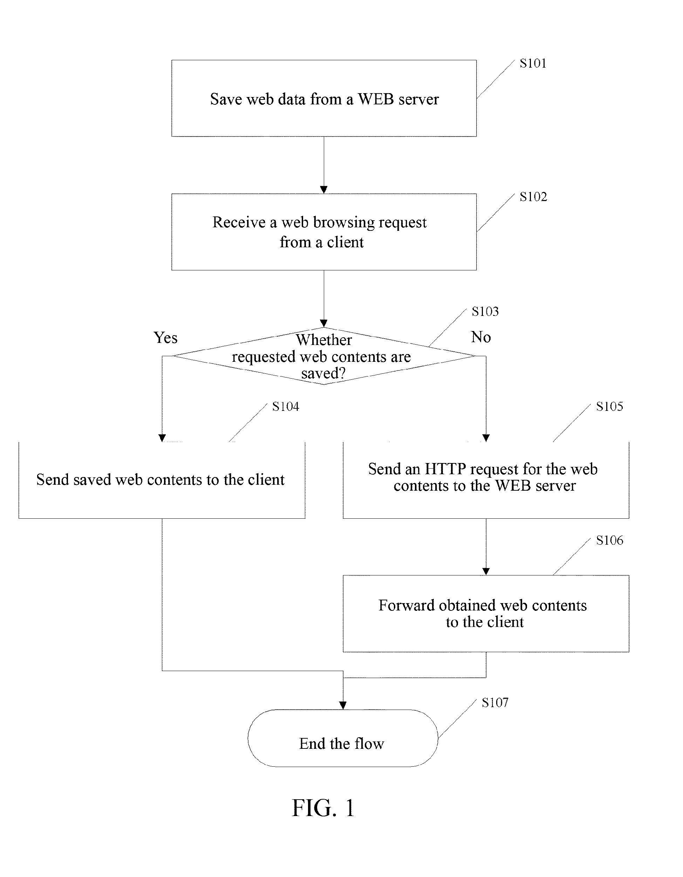

Fig.1 is a flowchart of a method for the router processing web data according the embodiment.

In step S101, it is to save web data from a WEB server;
a network interface of the router receives Transfer Control Protocol (TCP)data, and sends the TCP data to a TCP/IP protocol stack; the TCP/IP protocol stack filters the TCP data using a Netfilter to filter out the web data in Hypertext Transfer Protocol (HTTP) format; since a port of the HTTP data is 80, whether the TCP data are the web data is determined by judging whether the port of a TCP data packet equals 80; after obtaining web data, the router saves the web data; the web data comprises: web contents, a domain name, and an address of the WEB server;
since the space for storing the web data is limited, a situation that an available storage space cannot accommodate pre-stored web contents often occurs, at this point, it is required to delete the stored web contents stored in the occupied space to ensure to empty enough storage space for accommodating the pre-stored web contents; considering the timeliness of the web contents, the web contents in the occupied space may be deleted according to an order of a length of a storage time from long to short to ensure that latest web contents can be saved;

In order to ensure the timeliness of the web contents, after the web contents are stored in the storage space, it is to set a timer for the web contents, when a timer time is reached, it is to delete the web contents;

It can be predicted that, an operation of deleting web contents may cause that there is no web content under the domain name to which the web content belongs, at this point, the domain name may be deleted;

In step S102, it is to receive a web browsing request from a client;
it is to judge whether a website domain name is saved in local after the web browsing request from the client is received, if the web domain name is saved in local, it is to return an IP address of the local router to the client; after a web content request sent to the IP address by the client is received, then it is to proceed to step S103;

In step S103, it is to judge whether the requested web contents are saved, if the requested web contents are saved, it is to proceed to step S104; if the requested web contents are not saved, it is to proceed to step S105;

In step S104, it is to send the saved web contents to the client, it is to proceed to step S107;

In step S105, it is to send an HTTP request for the above web contents to the WEB server;

In step S106, it is to forward obtained web contents to the client;

In step S107, it is to end the flow.

The above embodiment is illustrated by way of an application example.

In step 1, a wireless router receives all TCP data through a WAN interface;

In step 2, the wireless router filters the TCP date through a Netfilter of TCP/IP protocol stack to filter out web data in HTTP format;

In step 3, the wireless router resolves the web data according the HTTP protocol to resolve out the web contents, a domain name, an IP address of the WEB server and a storage path on which the web contents are saved in the web server, etc;

In step 4, the wireless router stores the web contents as per the storage path; and stores the domain name and the IP address of the WEB server in a domain name database of the wireless router itself;

In step 5, the wireless router receives a web browsing request from a client;

In step 6, the wireless router searches for whether the domain name requested by the user exists in the domain name database, if the requested domain name exists in the domain name database, it is to proceed to step 8, if the requested domain name does not exists in the domain name database, it is to proceed to step 7;

In step 7, it is to send the browsing request to a DNS server; subsequent operations are same as the prior art, it is to proceed to step 13;

In step 8, it is to return a local IP address of the router back to the client;

In step 9, it is to receive a web content request sent to the IP address by the client, and to search for the web contents requested by the user in web contents cached in local according to path information carried in the web content request, if the requested web content is searched out, it is to proceed to step 12; if the request web content is not searched out, it is to proceed to step 10;
the client will carries the path information of the requested web contents when initiating the web content request, and the path information is the storage path on which the web contents are saved in the WEB server;

In step 10, the wireless router searches for an IP address of the router corresponding to the requested domain name in the domain name database, and initiates an HTTP request to the WEB server;

In step 11, the wireless router forwards obtained web contents to the client, it is to proceed to step 13;

In step 12, it is to send the saved web contents to the client;

In step 13, it is to end the flow.

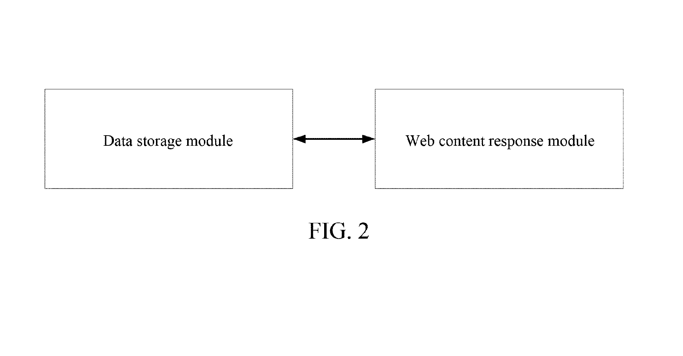

Fig. 2 is a diagram of constituent modules of a router.

The router comprises a data storage module and a web content response module, wherein:
the data storage module is configured to save web data from a WEB server;
the web data comprises: web contents, a domain name and an address of the WEB server;
the data storage module checks whether a remaining storage space may accommodate pre-stored web contents every time before saving the web contents included in the web data; if the remaining storage space may not accommodate the pre-stored web contents, deleting web contents in the occupied space according to an order of the length of a storage time from long to short, until the remaining storage space can accommodate the pre-stored web contents;

In order to ensure the timeliness of the web contents, after the web contents are stored in the storage space, the data storage module sets a timer for the web contents, and when a timer time is reached, deletes the web contents;
the data storage module further judges whether web contents under the domain name included in the web data exist, if the web contents under the domain name do not exist, deletes the domain name.

The web content response module is configured to receive a web browsing request from a client, judge whether requested web contents are saved in the data storage module, if the requested web contents are saved in the data storage module, send the saved web contents to the client.

The web content response module judges whether a website domain name included in the request is saved in local after the web browsing request from the client is received, if the web domain name is saved in local, returns an IP address of the local router back to the client; then judges whether the requested web contents are saved after receiving a web content request sent to the IP address by the client.

It can be understood by those skilled in the art that some or all steps in the abovementioned method can be fulfilled by relevant hardware components instructed with a program, and the program may be stored in a computer readable storage media such as read only memory, magnetic disk or optical disk and so on. Alternatively, all or part of steps of the above embodiments can be implemented by one and more integrated circuits, and correspondingly each module/unit in the aforementioned embodiment can be implemented in the form of hardware or software function module. The present invention is not limited to any combination of specific hardware and software forms.

It is should be illustrated that, the present invention has many other embodiments, without departing from the sprite and essence, one skilled in the art may make a variety of changes and variations according to the present invention, but the corresponding changes and variations should be included in the protection scope of the appended claims of the present invention.

### Industrial Applicability

The embodiments of the present invention reduce the network traffic caused by the user visiting the websites by means of saving the web contents and sending the saved web content to the client.

## Claims

1. A method for a router processing web data, comprising:
a router saving web data from a WEB server;
the router receiving a web browsing request from a client, judging whether requested web contents have been saved, if the requested web contents have been saved, sending the web contents requested by the client to the client.

2. The method of claim 1, wherein,
the router judging whether requested web contents have been saved, comprises:
the router judging whether a website domain name included in the web browsing request has been saved in the local router, if the website domain name has been saved in the local router, returning an Internet Protocol (IP) address of the local router back to the client;
the router receiving a web content request sent to the IP address by the client, and judging whether the request web contents have been saved.

3. The method of claim 1 or 2, wherein,
a router saving web data from a WEB server, comprises:
the router checking whether a remaining storage space may accommodate pre-stored web contents every time before saving the web contents included in the web data; if the remaining storage space may not accommodate the pre-stored web contents, deleting web contents in an occupied space according to an order of a length of a storage time from long to short, until the remaining storage space can accommodate the pre-stored web contents.

4. The method of claim 3, wherein,
a router saving web data from a web server further comprises:
after web contents are stored in the space, the router setting a timer for the web contents, when a timer time is reached, deleting the web contents.

5. The method of claim 4, wherein,
a router saving web data from a web server further comprises:
the router judging whether web contents under the domain name included in the web data exist, if the web contents under the domain name do not exist, deleting the domain name.

6. A router for processing web data, comprising a data storage module and a web content response module, wherein:
the data storage module is configured to save web data from a WEB server;
the web content response module is configured to receive a web browsing request from a client, judge whether requested web contents have been saved in the data storage module, if the requested web contents have been saved in the data storage module, send the requested web contents to the client.

7. The router of claim 6, wherein,
the web content response module is configured to judge whether requested web contents have been saved in the data storage module by means of:
judging whether a website domain name included in the web browsing request has been saved in the local router, if the website domain name has been saved in the local router, returning an Internet Protocol (IP) address of the local router to the client; after receiving a web content request sent to the IP address by the client, judging whether the requested web contents have been saved.

8. The router of claim 6 or 7, wherein,
the data storage module is configured to save web data from a WEB server by means of:
checking whether a remaining storage space may accommodate pre-stored web contents every time before saving the web contents included in the web data; if the remaining storage space may not accommodate the pre-stored web contents, deleting web contents in an occupied space according to an order of a length of a storage time from long to short, until the remaining storage space can accommodate the pre-stored web contents.

9. The router of claim 8, wherein,
the data storage module is further configured to save web data from a WEB server by means of:
after web contents are stored in the storage space, setting a timer for the web contents, when a timer time is reached, deleting the web contents.

10. The router of claim 9, wherein,
the data storage module is further configured to save web data from a WEB server by means of:
judging whether web contents under the domain name included in the web data exist, if the web contents under the domain name do not exist, deleting the domain name.
